# EUROPÄISCHE PATENTANMELDUNG

(11) **EP 1 610 539 A2**
(43) Veröffentlichungstag der Anmeldung: **28.12.2005**
(21) Anmeldenummer: 05019210.3
(22) Anmeldetag: 03.08.1998
(51) Int. Cl.: H04M 15/00, H04M 3/42

(54) **Verfahren und Schaltanordnung zur Nutzung von Telekommunikationsnetzwerken**

(30) Priorität: 27.08.1997 DE 19737255
(62) Teilanmeldung aus: 98114520.4
(71) Anmelder: Deutsche Telekom AG, 53113 Bonn (DE)
(72) Erfinder: Herling, Wolfgang, 53773 Hennef (DE)
(74) Vertreter: Braun-Dullaeus, Karl-Ulrich

(57) **Zusammenfassung**

Die Erfindung betrifft ein Verfahren zur Nutzung von Telekommunikationsnetzwerken für die getrennte Verrechnung von Verbindungsleistungen für Verbindungen, die zwei oder mehrere Telekommunikationsnetze nutzen,
wobei Kunde die Rufnummer eines Dienstanbieters 12 über ein Endgerät 1-3 wählt, das über einen Anschluss 4a-6a an ein erstes Telekommunikationsnetz 26 angeschaltet ist, wobei der Dienstanbieter ein weiteres zweites Telekommunkationsnetzwerk zu Verfügung stellt,
wobei dem Kunden A vom Dienstanbieter 12 bzw. E die nachgefragte, kostenpflichtige Dienstleistung, nämlich die Zurverfügungstellung des zweiten Telekommunkationsnetzwerkes, bereitgestellt wird,
wobei die Verbindung 4-6 von der Einrichtung 7-9 zur Entgegennahme, zum Herstellen und zum Tarifieren lediglich für die vom ersten Telekommunkationsnetz bereitgestellte Verbindungsleistung, nicht jedoch für die Entgeltung des Dienstanbieters tarifiert wird,
wobei Filtereinrichtungen 13-15 daraufhin programmiert werden, dass alle Verbindungen, welche die Zielkennzahl eines Dienstanbieters haben, erkannt werden und die Verbindungsdaten wie Datum, Anfangs- und Endzeitpunkt sowie von welchem Anschluss diese Verbindung initialisiert worden ist, zu einer Registrier-/Sortiereinrichtung 19 übertragen werden,
wobei die Registrier-/Sortiereinrichtung 19 alle Verbindungen zum Ziel bzw. Diensteanbieter nach den Ursprungsanschlüssen, von denen die Anrufe ausgegangen sind, ordnet,
wobei je nach Ursprungsanschluss/Ursprungsanschlüssen zugeordnete(n) Verbindungsliste(n) an eine Zuordnungseinrichtung 20 weitergeleitet wird/werden und wobei danach die Zuordnungseinrichtung 20 für jeden Ursprungsanschluss 4a-6a den Namen des Anschlusskunden und dessen Rechnungsanschrift bei der/den Kunden-Anschlussdatenbank(en) automatisiert nachgefragt und die so vervollständigte Liste aneine Ausgabeeinrichtung 21 übertragen wird, die die vervollständigten Listen zum ausdrucken bzw. Weiterleiten speichert bzw. bereithält.

## Beschreibung

Die Erfindung betrifft ein Verfahren und eine Schaltungsanordnung zur Nutzung von Telekommunikationsnetzwerken.

Bei den bisher bekannt gewordenen Verfahren bzw. Schaltungsanordnungen zur Nutzung von Telekommunikationsnetzwerken für die getrennte Verrechnung von Verbindungsleistungen für Verbindungen, die zwei oder mehr Telekommunikationsnetze nutzen, ist die Verwendung einer besonderen Zugangskennzahl Voraussetzung. Die besonderen Zugangskennzahlen werden in Deutschland vom Bundesministerium für Post und Telekommunikation verwaltet und beginnen derzeit alle mit einer Ziffernfolge 01. Unter dem Titel "Der Wettbewerb nimmt Gestalt an: Kennzahlen für Verbindungsnetzbetreiber und Rufnummern für Telefonauskunftsdienste im BMPT vergeben" werden in der telekom/praxis 7-97 entsprechende Rufnummern vorgestellt und beschrieben.

Verbindungen mit einer besonderen Zugangskennzahl werden besonders tarifiert, d. h., der Kunde, der eine Verbindung mit einer besonderen Zugangskennzahl wählt, bezahlt einen anderen Preis nach einem anderen Preisschema als der Kunde, der eine normale Verbindung nach dem Schema Ortsnetzkennzahl/Nummer des Zielanschlusses im Ortsnetz wählt.

Während bei einer "normalen" Verbindung nach dem Schema Ortsnetzkennzahl/Nummer des Zielanschlusses im Ortsnetz ausschließlich die Leistung des Telekommunikationsnetzes, nämlich die Verbindungsleistung, dem Anrufer mittels Fernmelderechnung in Rechnung gestellt wird, wird bei besonderen Zugangskennzahlen neben der Leistung des Telekommunikationsnetzes auch die nachgefragte Dienstleistung, nämlich die Verbindungsleistungen eines anderen Netzbetreibers, in Rechnung gestellt. Dabei bleiben die Zusammenhänge dem unwissenden Anrufer verborgen. Aber auch der wissende Anrufer wird nicht erfahren, welchen Anteil des Gesamtgeldes für eine konkrete Verbindung mit einer besonderen Zugangskennzahl für die Transportleistung und welcher Anteil für die eigentliche nachgefragte/beauftragte Dienstleistung, nämlich die Verbindungsleistungen eines anderen Netzbetreibers, angefallen ist. Die Verrechnung und Aufteilung des Gesamtentgeltes wird zwischen dem Betreiber des Telekommunikationsnetzes und den anderen Netzbetreibern vorgenommen.

Der Erfindung liegt die Aufgabe zugrunde, ein Verfahren und eine Schaltungsanordnung zur Nutzung von Telekommunikationsnetzwerken für die getrennte Verrechnung von Verbindungsleistungen für Verbindungen zu schaffen, die zwei oder mehrere Telekommunikationsnetze nutzen, und die eine getrennte Abrechnung möglich macht.

Diese Aufgabe wird durch das Verfahren nach Anspruch 1 und die Schaltungsanordnung nach Anspruch 10 gelöst. Vorteilhafte Ausgestaltungen sind in den jeweiligen Unteransprüchen genannt.

Das vorgenannte Verfahren und die vorgenannte Schaltungsanordnung ermöglichen
1. das Anbieten von Verbindungsdienstleistungen weiterer Netzbetreiber ohne Verwendung einer besonderen Zugangskennzahl und
2. die getrennte Aufstellungen über die vom Anrufer in Anspruch genommene Verbindungsleistung des Telekommunikationsnetzes und der von ihm nachgefragten Verbindungsdienstleistungen weiterer Netzbetreiber.

Es soll hier betont werden, dass es selbstverständlich möglich ist, das vorgeschlagene Verfahren bzw. die vorgeschlagene Schaltungsanordnung auch für besondere Zugangskennzahlen zu nutzen. Dies erscheint dann sinnvoll, wenn dem Kunden getrennte Rechnungen für Verbindungsleistungen und für in Anspruch genommene Verbindungsdienstleistungen weiterer Netzbetreiber gestellt werden müssen.

Die Erfindung wird nun anhand von in der Zeichnung dargestellten Ausführungsbeispielen näher erklärt. Es zeigen:
- **Fig.1:**: eine Schaltungsanordnung zur Nutzung eines Telekommunikationsnetzwerkes für die getrennte Verrechnung von Verbindungsleistungen für Verbindungen, die zwei oder mehr Telekommunikationsnetze nutzen; und
- **Fig. 2:**: eine Schaltungsanordnung mit mehreren miteinander verbundenen Telekommunikationsnetzen.

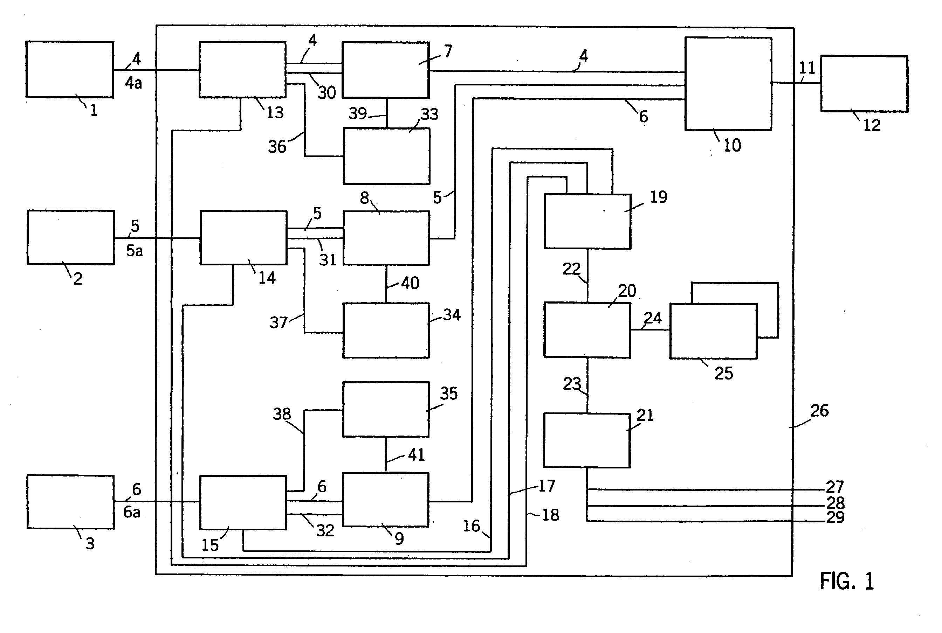

Zunächst sei die Schaltungsanordnung nach Fig. 1 beschrieben. Die mit 1, 2 bzw. 3 bezeichneten Kästchen sind Endgeräte, z. B. ISDN-Telefone, von denen Verbindungen 4, 5 bzw. 6 über Anschlüsse des Telekommunikationsnetzes 4a, 5a bzw. 6a zur Zieleinrichtung 12 im Telekommunikationsnetz 26 ausgelöst werden. Die von 7 bis 9 gekennzeichneten Kästchen in der Schaltung sind Einrichtungen des Telekommunikationsnetzes 26, die die von den Endgeräten 1 bis 3 ausgelösten Verbindungsaufträge 4 bis 6 entgegennehmen, herstellen und tarifieren. Das mit 10 gekennzeichnete Kästchen ist eine Einrichtung des Telekommunikationsnetzes 26, an die der Zielanschluss 11 angeschaltet ist. Über den Zielanschluss 11 werden die Verbindungen 4 bis 6 zur Zieleinrichtung 12 geleitet. Die Zieleinrichtungen 12 sind weiteren Netzbetreibern zugeordnet, zu dem die ankommenden Verbindungen 4 bis 6 geleitet werden. Zwischen die Endgeräte 1 bis 3 und die Einrichtungen 7 bis 9 des Telekommunikationsnetzes 26 sind nun Filterschaltungen 13 bis 15 geschaltet, die alle Verbindungen zu der Zieleinrichtung 12 erkennen und deren charakterisierende Daten (Ursprungsanschluss, Zielanschluss, Datum, Beginn- und Ende-Uhrzeit) zwecks Registrierung an eine Registrier-/Sortiereinrichtung 19 weiterleiten. Die Filtereinrichtungen 13 bis 15 sind mit einer Sperrfunktion ausgestattet, die Verbindungen von einem eindeutig bestimmten Ursprungsanschluss zu kostenpflichtigen Dienstleistungszielen unterbindet. Zwischen den Filtereinrichtungen 13 bis 15 und der Registrier-/Sortiereinrichtung 19 liegen Datenwege 16 bis 18. Die Filtereinrichtungen 13 bis 15 können entweder einzeln oder über eine nicht dargestellte gemeinsame zentrale Eingabestelle programmiert werden. Die Registrier-/Sortiereinrichtung 19 nimmt eine Sortierung aller von den Filtereinrichtungen 13 bis 15 übermittelten Verbindungsdaten nach Ursprungsanschlüssen 4a bis 6a vor. Der Registrier-/Sortiereinrichtung 19 ist eine Zuordnungseinrichtung 20 nachgeschaltet, die die Kundenanschriften für alle von der Registrier-/Sortiereinrichtung 19 aufgeführten Ursprungsanschlüsse 1 bis 3 bei der/den Kundenanschlussdatenbank(en) 25 nachfragt. Die Datenbank(en) 25 beinhaltet bzw. beinhalten die Kundenadressen für alle Ursprungsanschlüsse 4a bis 6a. Der Zuordnungseinrichtung 20 ist eine Ausgabeeinrichtung 21 nachgeschaltet, die nach Kundenanschriften sortiert und alle über einen Ursprungsanschluss 4a bis 6a erfolgten Verbindungen 4 bis 6 mit den für eine Rechnungsstellung erforderlichen Daten (Kundenanschrift; Ursprungsanschluss; Datum, Beginn und Ende einer jeden Verbindung) auflistet. Datenwege 22 bis 24 zwischen de genannten Registrier-/Sortiereinrichtung 19, der Zuordnungseinrichtung 20, der Ausgabeeinrichtung 21 und der/den Kundenanschlussdatenbank(en) 25 dienen der Verbindung der genannten Einrichtungen. Die Kundenanschlussdatenbank(en) 25 speichert bzw. speichern für alle Ursprungsanschlüsse 4a bis 6a die Kundenadressen. Der mit 27 bezeichnete Ausgang der Ausgabeeinrichtung 21 soll den Versand der von der Ausgabeeinrichtung 21 erstellten Listen per Briefpost an den Diensteanbieter symbolisch darstellen.

Des weiteren soll der mit 28 gekennzeichnete Ausgang der Ausgabeeinrichtung 21 den Versand der von der Ausgabeeinrichtung 21 erstellten Listen mittels elektronischer Post an den Anbieter der Verbindungsdienstleistungen weiterer Netzbetreiber darstellen und der mit 29 gekennzeichnete Ausgang die Wahrnehmung des Inkassos durch den Telekommunikationsnetzbetreiber im Auftrag des Diensteanbieters.

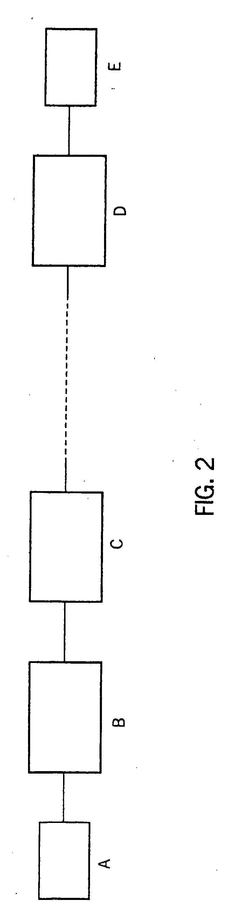

Im nachfolgenden wird anhand der Fig. 2 die getrennte Verrechnung von Verbindungsleistungen für Verbindungen, die zwei oder mehr Telekommunikationsnetze nutzen, detailliert erklärt.

Dabei kommt die Schaltungsanordnung nach Fig. 1 zur Anwendung. Die Zieleinrichtung 12 ist ein weiteres Telekommunikationsnetz C, D, ... In der Fig. 2 ist der Kunde A dargestellt, der eine Verbindung über mehrere Telekommunikationsnetze B, C, ...D zum Ziel E veranlasst. Das erste an der Gesamtverbindung beteiligte Telekommunikationsnetz ist mit B bezeichnet und das zweite mit C. Mit D ist ein weiteres an der Gesamtverbindung beteiligtes Telekommunikationsnetz bezeichnet, wobei prinzipiell davon ausgegangen werden kann, dass zwischen C und D noch andere Telekommunikationsnetze angeordnet sind, die an der Gesamtverbindung beteiligt sind. Mit E ist eine Senke der vom Kunden A verursachten Verbindung bezeichnet, wobei E auch ein Diensteanbieter sein kann. Ist z. B. das zweite, dritte, ... Telekommunikationsnetz C, ... D so ausgestattet wie das Telekommunikationsnetz 26 nach Fig. 1, dann kann jede Leistung eines einzelnen, an einer Verbindung beteiligten Telekommunikationsnetzes B bis D erfasst werden. Der Gesamtpreis für die Verbindungen errechnet sich additiv aus den Einzelleistungen der beteiligten Telekommunikationsnetze.

Mit der vorgeschlagenen Schaltungsanordnung bzw. mit dem vorgeschlagenen Verfahren wird jeder einzelne Telekommunikationsnetzbetreiber in die Lage versetzt, dem Verursacher der Verbindung (Anrufer) seinen Verbindungsanteil genau in Rechnung zu stellen.

Wird ein federführender Telekommunikationsnetzbetreiber administrativ bestimmt, der dem Anrufer die Gesamtverbindungsleistung in Rechnung stellt, so kann auf Basis der nunmehr vorliegenden Daten eine Verrechnung zwischen den Telekommunikationsnetzbetreibern erfolgen. Das vorgeschlagene Verfahren bzw. die Schaltungsanordnung zur Durchführung des Verfahrens ermöglicht eine individuelle Preisfestlegung/Bestimmung jeder einzelnen, für eine zusammengesetzte Gesamtleistung erforderliche Teilleistung, sei es Verbindungsleistung oder kostenpflichtige Informationsleistung. Damit werden Abrechnungsverfahren zwischen allen an einer Telekommunikationsverbindung beteiligten Unternehmungen und dem Endkunden durchgängig transparent und nachvollziehbar.

Zunächst dient die Filtereinrichtung 13 bis 15 dazu, Verbindungen zu Zielrufnummern, die vorher in die Filtereinrichtung 13 bis 15 eingegeben worden sind, herauszufiltern, damit in Folge neben der Tarifierung der Verbindungsleistung getrennt eine Bepreisung der Zusatzleistung ermöglicht wird, so dass dem anrufenden Kunden beide Preispositionen getrennt in Rechnung gestellt werden können. An der Tarifierung der Verbindungsleistung, die in den Einrichtungen 7 bis 9 vorgenommen wird, ändert sich durch die Einbringung der Filtereinrichtung 13 bis 15 nichts.

## Patentansprüche

1. Verfahren zur Nutzung von Telekommunikationsnetzwerken für die getrennte Verrechnung von Verbindungsleistungen für Verbindungen, die zwei oder mehrere Telekommunikationsnetze nutzen,
dass ein Kunde A die Rufnummer eines Dienstanbieters (12 bzw. E) über ein Endgerät (1-3) anwählt, das über einen Anschluss (4a-6a) an ein erstes Telekommunikationsnetz (26) angeschaltet ist, wobei der Dienstanbieter dem Kunden ein zweites Telekommunkationsnetzwerk kostenpflichtig zur Verfügung stellt,
dass eine Einrichtung (7-9) zur Entgegennahme, zum Herstellen und zum Tarifieren vorhanden ist, der lediglich die vom ersten Telekommunkationsnetz bereitgestellte Verbindungsleistung nicht jedoch für die Entgeltung des Dienstanbieters tarifiert wird,
**dadurch gekennzeichnet,**
**dass** Filtereinrichtungen (13-15) daraufhin programmiert werden, dass alle Verbindungen, welche die Zielkennzahl eines Dienstanbieters haben, erkannt werden und dass die Verbindungsdaten, wie Datum, Anfangs- und Endzeitpunkt sowie von welchem Anschluss diese Verbindung initialisiert worden ist, zu einer Registrier-/Sortiereinrichtung (19) übertragen werden,
**dass** die Registrier-/Sortiereinrichtung (19) alle Verbindungen zum Diensteanbieter nach den Ursprungsanschlüssen, von denen die Anrufe ausgegangen sind, ordnet,
**dass** je nach Ursprungsanschluss eine zugeordnete Verbindungsliste an eine Zuordnungseinrichtung (20) weitergeleitet wird und
**dass** die Zuordnungseinrichtung (20) für jeden Ursprungsanschluss (4a-6a) den Namen des Anschlusskunden und dessen Rechnungsanschrift bei einer Kunden-Anschlussdatenbank automatisiert nachgefragt und die so vervollständigte Liste an eine Ausgabeeinrichtung (21) überträgt, die die vervollständigten Listen zum Ausdrucken bzw. Weiterleiten speichert bzw. bereithält.

2. Verfahren nach Anspruch 1,
**dadurch gekennzeichnet, dass** die vollständige Liste von der Ausgabeeinrichtung (21) über elektronische Übermittlungswege an den Diensteanbieter übertragen wird, der anhand dieser dem Kunden seine bereitgestellte Verbindungsleistung in Rechnung stellt.

3. Verfahren nach Anspruch 1 oder 2,
**dadurch gekennzeichnet, dass** die Ausgabeeinrichtung (21) die vollständige(n) Liste(n) zur Erbringung einer Inkassoleistung des ersten Telekommunikationsnetzbetreibers im Auftrag des Diensteanbieters bereithält bzw. speichert, wobei der Telekommunikationsnetzbetreiber die nachgefragten kostenpflichtigen Zurverfügungstellung des zweiten Telekommunkationsnetzwerkes getrennt aufführt, aber zusammen mit dem Rechnungsbetrag für die vom Kunden in Anspruch genommenen, im ersten Telekommunikationsnetz (26) erbrachten Verbindungsleistungen in Rechnung stellt und wobei der vom Telekommunikationsnetzbetreiber vom Kunden inkassierte Betrag für die kostenpflichtige Zurverfügungstellung des zweiten Telekommunkationsnetzwerkes an den Diensteanbieter (12 bzw. E) überwiesen wird.

4. Schaltungsanordnung zur Durchführung des Verfahrens nach einem der Ansprüche 1 bis 3,
**dadurch gekennzeichnet,**
**dass** zwischen vorhandenen Anschlüssen (4a-6a) mit Endeinrichtungen (1-3) im ersten Telekommunkationsnetz (26) Einrichtungen (7-9) angeordnet sind, die derart ausgestaltet sind, dass sie die ausgelösten Aufträge für Verbindungen (4-6) entgegennehmen, herstellen und tarifieren, dass Filtereinrichtungen (13-15) angeordnet sind, die derart ausgestaltet sind, dass sie alle Verbindungen zu einem weiteren zweiten Telekommunikationsnetzwerk erkennen und deren charakterisierende Daten zwecks Registrierung in eine Registrier-/Sortiereinrichtung (19) über Datenwege (16-18) weiterleiten,
**dass** der Ausgang der Registrier-/Sortiereinrichtung (19) über einen Datenweg (22) mit einer Zuordnungseinrichtung (20) verbunden ist, die derart ausgestaltet ist, dass sie die Kundenanschriften für alle von der Registrier-/Sortiereinrichtung (19) aufgeführten Ursprungsanschlüsse (4a-6a) bei einer oder mehreren Kunden-Anschlußdatenbank(en) (25) über Datenweg (24) nachfragt,
**dass** der Ausgang der Zuordnungseinrichtung (20) über einen Datenweg (23) mit einer Ausgabeeinrichtung (21) verbunden ist, die derart ausgestaltet ist, dass sie automatisch nach Kundenanschriften sortiert, alle über einen Ursprungsanschluss (4a-6a) erfolgten Verbindungen (4-6) mit den für eine Rechnungsstellung erforderlichen Daten auflistet und über verschiedene Ausgänge (27-29) automatisch Listen und Einzugsverfahren in Listenform oder elektronischer Form bereitstellt.

5. Schaltungsanordnung nach Anspruch 4,
**dadurch gekennzeichnet,**
**dass** zwischen der Endeinrichtung eines Kunden (A) und einem Ziel (E) mehrere Telekommunikationsnetze (B-D) angeordnet sind, die Filtereinrichtungen (13-15), Datenwege (16-18), eine Registrier-/Sortiereinrichtung (19), eine Zuordnungseinrichtung (20) und eine Ausgabeeinrichtung (21) mit Ausgängen (27) aufweisen, wobei die Ausgabeeinrichtung (21) derart ausgebildet ist, dass sie über die Ausgänge (27) das Versenden der erstellten Listen per Briefpost oder elektronisch veranlasst oder Lisen zur Wahrnehmung eines Inkassos durch den Telekommunikationsnetzbetreiber im Auftrag des Diensteanbieters bereitstellt.
